# EUROPÄISCHE PATENTSCHRIFT

(11) **EP 2 241 435 B1**
(45) Veröffentlichungstag und Bekanntmachung des Hinweises auf die Patenterteilung: **27.06.2012**
(21) Anmeldenummer: 10003988.2
(22) Anmeldetag: 15.04.2010
(51) Int. Cl.: B32B 5/00, B32B 15/01, B32B 15/02, B32B 15/04, B32B 15/18, B32B 15/20, F16L 59/00, F16L 59/14, B60R 13/08, F16L 59/02

(54) **Isoliervorrichtung**
Insulating device
Dispositif d'isolation

(30) Priorität: 15.04.2009 DE 102009017102; 07.05.2009 DE 102009020321; 15.04.2009 DE 102009017103; 08.05.2009 DE 102009020370
(43) Veröffentlichungstag der Anmeldung: 20.10.2010
(73) Patentinhaber: BDD Beteiligungs GmbH, 68169 Mannheim (DE)
(72) Erfinder: Becker, Michael, 67480 Edenkoben (DE); Darmstädter. Klaus, 68623 Lampertheim (DE)
(74) Vertreter: Schmitt, Meinrad

(56) Entgegenhaltungen:
- EP-A1- 0 403 943
- EP-A2- 1 847 382
- CH-A- 249 215
- DE-A1- 2 812 680
- DE-B- 1 267 499
- DE-C- 650 010
- DE-C- 748 136
- DE-C1- 4 445 794

## Beschreibung

Die Erfindung bezieht sich auf eine Isoliervorrichtung gemäß den in Patentanspruch 1 angegebenen Merkmalen. Ferner bezieht sich die Erfindung auf ein Verfahren zur Herstellung der Isöliervorrichtung.

Eine derartige ist aus der DE 650 010 C bekannt, welche zwei Blech-Faserstoff-Schalen enthält enthalten eine äußere Blechhülle als Außenmantel und ein inneres Drahtgewebe, welches einem beispielsweise als Rohr ausgebildete Bauteil zugeordnet ist. Zwischen der äußeren Blechhülle und dem Drahtgewebe ist als Isoliermaterial eine Faserstoffwärmeschutzhülle weiche am Drahtgewebe befestigt ist, wobei dünne Bandeisen oder Blechstreifen vorgesehen sind. Ferner sind Blech- oder Bandeisenstreifen an der äußeren Blechhülle befestigt, welche die andere Blech-Faserstoff-Schale umfassen. Die Blech-Faserstoff-Schalen weisen aufgrund der gegenseitigen Verspannung und der kreisförmigen Ausbildung eine große Steifigkeit auf.

Des Weiteren ist aus der DE 28 12 680 A1 ein Isolierelement mit einer Umhüllung aus herkömmlichen Gewebe, beispielsweise Glasfasergewebe bekannt. Die Umhüllung verleiht dem als Kern bezeichneten Isoliermaterial eine ausreichende Festigkeit und Elastizität, wobei aber keine weitere Schicht zum Schutz des Isoliermatarials vorgesehen ist.

Ein doppelwandiger Hohlkörper ist aus der DE 12 67 499 B bekannt, welche insbesondere als Rohrleitung mit einem Innenrohr und einem koaxialen äußeren Rohr ausgebildet ist Das Innenrohr enthält für einen Druckausgleich zwischen einem Innen- und Außenraum Öffnungen und ist von einem Drahtgeflecht als Untertage für eine Filterschicht umgeben. Zwischen der Filterschicht und dem äußeren Rohr ist zudem eine Schicht aus Isolierstoff, bevorzugt Mineralwolle angeordnet.

Die DE 249 215 A betrifft einen thermischen Isolierkörper für Rohrleitungen mit einer äußeren formfesten Hülle aus einer etwa 1 bis 4 mm dicken Bahn aus Karton, Gewebe oder Pressstoff, welche eine thermische Isolierfüllung umgeben. Die zu isolierende Rohrleitung wird von zwei derartigen Isolierkörpern umgeben. Es sind keine Hinweise entnehmbar, einen Außenmantel von einem metallischen Feindrahtgewebe zu umgeben.

Eine andere Isoliervorrichtung ist aus der EP 1 134 478 B1 für ein als abgasrohr ausgebildetes Maschinenelement bekannt, welches von einem heißen Medium, nämlich dem Abgas, eines als Verbrennungsmotor ausgebildeten Aggregats durchströmbar ist. Die Isoliervorrichtung enthält einen das Maschinenelement umgebenden Innenmantel sowie einen zu diesem beabstandet angeordneten Außenmantel, wobei zwischen den beiden Mänteln ein mit Isoliermaterial ausgefüllter Hohlraum vorhanden ist. Der Innenmantel und der Außenmantel sind flexibel derart ausgebildet, dass sie durch Aufspreizen ihrer Enden über das Maschinenelement geschoben werden können und nachfolgend die Isoliervorrichtung auf dem Maschinenelement festlegbar ist. Diese Isoliervorrichtung hat sich für viele Anwendungsfälle bewährt, doch für weitere Anwendungsfälle besteht aufgrund besonderer Anforderungen ein erheblicher Bedarf nach hiervon abweichenden Lösungen.

Ferner ist aus der EP 1 197 323 A1 eine Isoliervorrichtung bekannt, welche als Laminat bzw. Metallfilzstruktur ausgebildet ist. Diese Isoliervorrichtung ist an eine Außenfläche eines Bauteiles oder Maschinenelements angebasst und angeschweißt Das Isoliermaterial ist mit dem Außenmantel und dem Innenmantel durch Schweißen verbunden und weist über die gesamte Fläche eine gleichbleibende Dicke auf.

Des Weiteren ist aus der WO 2007/062 781 A2 eine als Gewebelaminat ausgebildete Isoliervorrichtung bekannt. Diese Isoliervorrichtung weist drei übereinander geschichtete und wenigstens teilweise miteinander verschweißte Gewebelagen auf, welche relativ zueinander grobe und feine Strukturen aufweisen, wobei diese Gewebelagen miteinander verwobene oder vliesartig verschlungene metallische Drähte enthalten.

Hiervon ausgehend liegt der Erfindung die Aufgabe zugrunde, die Isoliervorrichtung mit einem geringen konstruktiven Aufwand dahingehend weiterzubilden, dass in einfacher und gleichwohl funktionssicherer Weise die Anpassung an das zu isolierende Bauteil und/oder die Festlegung auf dem Bauteil ermöglicht wird. Die Isoliervorrichtung soll in einfacher Weise herstellbar sein und problemlos zu handhabende und/oder miteinander zu verbindende Bestandteile enthalten. Weiterhin soll die Isoliervorrichtung für hohe Temperaturen verwendbar sein, und zwar insbesondere für Temperaturen größer als 200°C, zweckmäßig bis 500°C. bevorzugt bis 700°C und insbesondere bis 1000°C. Das Verfahren zur Herstellung oder die Verwendung der Isoliervorrichtung sollen vereinfacht werden und/oder problemlos durchführbar sein.

Die Lösung dieser Aufgabe erfolgt gemäß den im Patentanspruch 1 angegebenen Merkmalen. Ferner erfolgt die Lösung gemäß den Merkmalen des auf das Verfahren gerichteten, nebengeordneten Patentanspruchs.

Die erfindungsgemäße Isoliervorrichtung enthält einen als metallisches Feindrahtgewebe ausgebildeten Innenmantel, welcher dem zu isolierenden und von einem heißen Medium, insbesondere Abgas, durchströmbaren Bauteil zugeordnet wird. Der Außenmantel ist als eine Folie ausgebildet, nämlich als Edelstahlfolie, Aluminiumfolie oder als Glasgewebe mit einer insbesondere einseitigen Kaschierung oder Beschichtung insbesondere aus PTFE, Silikon oder PE. Für die Ausbildung Als Folie dienen diese in bevorzugter Weise als Sperrschicht, um das Eindringen von Flüssigkeit, insbesondere Wasser oder Kraftstoff, in vorteilhafter Weise zu verhindern. Es ist auf dem Außenmantel zur Außenseite hin ein metallisches Feindrahtgewebe angeordnet. Die Isoliervorrichtung ist in einfacher Weise verformbar und an das zu isolierende Bauteil anpassbar. Zwischen dem Innenmantel und dem Außenmantel ist das Isoliermaterial angeordnet, welches insbesondere als Edelstahlwolle oder Dämmfaserwerkstoff oder Glasfasernadelmatte ausgebildet ist. Die Isoliervorrichtung gelangt insbesondere bei Motoren und/oder in Kraftfahrzeugen zur Wärmedämmung und/oder Schalldämmung zum Einsatz, wobei der Innenmantel einer Innenseite bzw. den zu isolierenden Bauteil wie Aggregat, Motor oder dergleichen zugeordnet ist und der Außenmantel der Außenseite zugeordnet ist. Die Isoliervorrichtung und insbesondere der Innenmantel und/oder der Außenmantel sind flexibel und/oder bevorzugt plastisch verformbar.

Es ist zur Außenseite hin auf dem Außenmantel ein isches Feindrahtgewebe angeordnet, wobei zur Verformung bevorzugt ein geeignetes Fomgebungswerkzeug zur Schaffung eines auf das Bauteil angestimmten Formteils zum Einsatz gelangt. In der alternativen Ausbildung der Isoliervorrichtung mit dem als Sperrschicht ausgebildeten Außenmantel, sind die Flexibilität und/oder bevorzugt plastische Verformbarkeit derart vorgegeben, dass für die Verformung und/oder Anpassung an das zu isolierende Bauteil Formgebungswerkzeuge nicht erforderlich sind.

Das Feindrahtgewebe des Innenmantels und das äußere Feindrahtgewebe enthalten Metalldrähte mit einer Drahtstärke im Bereich von 0,01 bis 0,09 mm, vorteilhaft zwischen 0,03 bis 0,07 mm und insbesondere von im Wesentlichen 0,05 mm. Die Maschenweite des Metalldrahgewebes ist im Bereich von 0,05 bis 0,14 mm, vorteilhaft von 0,07 bis 0,12 mm und insbesondere von im Wesentlichen 0,09 mm vorgegeben. Des Weiteren ist die offene Fläche zwischen den Drähten im Bereich von 28 bis 55 %, vorteilhaft im Bereich von 35 bis 48 % und insbesondere von im Wesentlichen 41 % der Gesamtfläche vorgegeben.

Die für den Außenmantel verwendete Folie, ist einerseits plastisch verformbar und andererseits derart steif und/oder stabil ausgebildet, dass das Formteil dauerhaft die Form im Wesentlichen beibehält. Bei Ausbildung als Aluminiumfolie weist diese eine Dicke im Bereich zwischen 0.01 bis 0,08 mm, insbesondere zwischen 0,02 bis 0,06 mm auf. Bei Ausbildung als Edelstahlfolie ist die Dicke im Bereich zwischen 0,05 bis 0,5 mm vorgegeben, vorteilhaft im Bereich zwischen 0,075 bis 0,4 mm. Alternativ kann der Außenmantel ferner als Aluminiumfolie mit im Wesentlichen der gleichen Dicke wie die Edelstahlfolie ausgebildet sein oder gegebenenfalls um einen Faktor größer als 1,2 bis 2 ausgebildet sein. Die verwendeten Folien können verschiedenartige Strukturen aufweisen. Insbesondere hat sich hierbei die sogenannte Mikro- und/oder Makrostruktur bewährt.

Die insbesondere als Formteil ausgebildete Isoliervorrichtung zeichnet sich durch nachfolgende Eigenschaften in vorteilhafter Weise aus, wobei je nach Anwendungsfall oder Verwendung oder Einsatzzweck gegebenenfalls die eine oder andere Eigenschaft auch weniger ausgeprägt ist oder entfallen kann:
- geringes Gewicht
- kostengünstige Herstellung oder Materialeinsatz oder Handhabung
- Montagefreundlichkeit
- logistisch ausgereift
- geringe Entwicklungszeiten
- geringe Entwicklungskosten
- flexibles Änderungsmanagement
- komplexe Geometrien darstellbar
- Recyclefähigkeit (bei E-Wolle)
- Schallabsorptionsverhalten
- edles optisches Design
- Kompensation von Bauteil- und Montagetoleranzen
- geringe Oberflächentemperaturen
- gutes Vibrations- und/oder Schwingungsverhalten
- kein Teiletourismus (Montage beim Kunden vor Ort möglich)
- nachrüstbar
- keine speziellen Anbindungspunkte erforderlich
- keine akustischen Störgeräusche / Eigengeräusche
- spritzwasserbeständig
- medienresistent (RMI)

Besondere Ausgestaltungen und Weiterbildungen der Erfindung sind in den Unteransprüchen sowie der nachfolgenden Beschreibung besonderer Ausführungsbeispiele angegeben.

Die erfindungsgemäße Isoliervorrichtung und ferner deren Herstellung und Verwendung werden nachfolgend anhand der in der Zeichnung dargestellten Ausführungsbeispiele näher erläutert, ohne dass insoweit eine Beschränkung erfolgt. Es zeigen in schematischen Darstellungen:
- Fig. 1: ein Schnittbild der Isoliervorrichtung,
- Fig. 2: ein Ausführungsbeispiel der Isoliervorrichtung in flächiger Form vor einer Verformung,
- Fig. 3: eine Ansicht der Isoliervorrichtung gemäß Fig. 2 nach der Verformung,
- Fig. 4: ein Ausführungsbeispiel der Isoliervorrichtung, deren Rand mittels einer Schiene eingefasst ist,
- Fig. 5: teilweise ein Ausführungsbeispiel mit einer auf einem Rohr angeordneten Isoliervorrichtung,
- Fig. 6: ein weiteres Ausführungsbeispiel mit einer als Schlauch ausgebildeten Isoliervorrichtung.

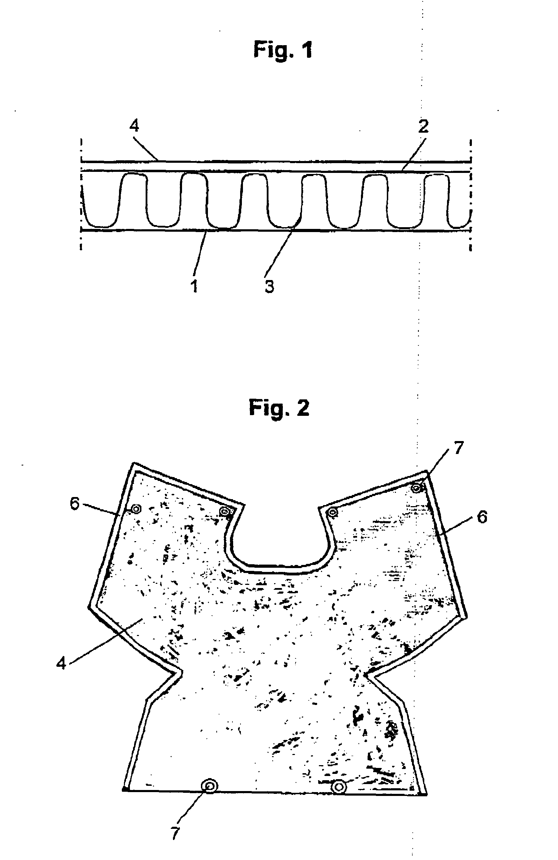

Die Isoliervorrichtung enthält gemäß Fig. 1 den Innenmantel 1, welcher als metallisches Drahtgewebe, insbesondere Feindrahtgewebe, ausgebildet ist. Der Außenmantel 2 ist als eine Folie, bevorzugt Metallfolie, insbesondere Aluminiumfolie oder Edelstahlfolie, ausgebildet. Zwischen dem Innenmantel 1 und dem Außenmantel 2 ist das Isoliermaterial 3 angeordnet, welches insbesondere als Edelstahlwolle oder Dämmfaserwerkstoff oder Glasfasernadelmatte ausgebildet ist. Bevorzugt ist zur Außenseite hin auf dem Außenmantel das insbesondere metallische Drahtgewebe 4, bevorzugt Feindrahtgewebe, angeordnet. Die Isoliervorrichtung ist in einfacher Weise verformbar und/oder an das isolierende Bauteil anpassbar, wobei ein geeignetes Formgebungswerkzeug zur Schaffung eines auf das Bauteil abgestimmten Formteils zum Einsatz gelangt. Die für den Außenmantel 2 verwendete Folie oder Metallfolie oder das Blech sind einerseits plastisch verformbar und andererseits derart steif und/oder stabil ausgebildet, dass das Formteil nach der Verformung dauerhaft die Form beibehält.

Nachfolgend wird das Verfahren zur Herstellung der als Formteil ausgebildeten Isoliervorrichtung erläutert. Die erläuterten Bestandteile der Isoliervorrichtung, nämlich der Innenmantel 1, das Isoliermaterial 3, der Außenmantel 2 und gegebenenfalls das äußere Drahtgewebe 4 werden zunächst bevorzugt als Rollenware bereitgestellt und gemeinsam einer Vorrichtung zugeführt, welche insbesondere Walzen aufweist, zur Vereinigung zu einem Flächenprodukt in Sandwich-Bauweise, und zwar insbesondere quasi endlos. Nachfolgend wird aus dem Flächenprodukt und/oder Sandwichprodukt in einem gemeinsamen Zuschnitt und/oder bei gemeinsamer Fertigung und/oder Bearbeitung der genannten Bestandteile, insbesondere durch Stanzen oder Schneiden, insbesondere mittels eines Laserstrahls, aus dem Flächenprodukt und/oder Sandwichprodukt die Isoliervorrichtung mit der gewünschten Außenkontur erzeugt, wobei beliebige Außenkonturen und/oder Formen hergestellt werden. Daraufhin wird die Verbindung von Innenmantel, Isoliermaterial und Außenmantel, bevorzugt auch mit dem äußeren Drahtgewebe 4 durchgeführt, und zwar immer noch in flächiger Form. Die Verbindung erfolgt insbesondere im Randbereich und/oder an den Rändern durch Verpressen, Schweißen, Nähen, Bilden eines Saumes gegebenenfalls mit einem Saumband oder sonstigen Verstärkungselementen, mittels Klammern oder dergleichen, wobei ferner Druckknöpfe, Verstärkungsdrähte oder dergleichen in zweckmäßiger Weise integriert werden. Schließlich wird die in flächiger Form vorgefertigte Isoliervorrichtung entsprechend dem zu isolierenden Bauteil mit einem geeigneten Formgebungswerkzeug verformt. Die Formgebung erfolgt insbesondere mittels Presswerkzeugen gemäß den bekannten Außenkonturen des zu isolierenden Bauteils. Nachfolgend wird die Verbindung des Formteils mit dem Bauteil hergestellt. In einer besonderen Ausgestaltung des Herstellverfahrens können der gemeinsame Zuschnitt und/oder die gemeinsame Fertigung und/oder Bearbeitung der genannten Bestandteile in Kombination mit der Verformung in einem gemeinsamen Arbeitsschritt und/oder mit der gleichen Maschine durch Stanzen oder Schneiden kombiniert mit der entweder gleichzeitig oder nachfolgend durchgeführten Verformung des Flächen- und/oder Sandwich-Produkts zum fertigen Formteil erfolgen.

In einer anderen Ausgestaltung der Erfindung ist der zwischen dem äußeren Drahtgewebe 4 und dem Isoliermaterial 3 angeordnete Außenmantel 2 bevorzugt als Sperrschicht ausgebildet, welche insbesondere als Edelstahlfolie, Aluminiumfolie oder Glasgewebe mit einer insbesondere einseitigen Kaschierung oder Beschichtung aus PTFE, Silikon oder PE versehen ist. Mittels des als Sperrschicht ausgebildeten Außenmantels 2 wird somit das Eindringen von Flüssigkeit, sei es Wasser oder Kraftstoff, in vorteilhafter Weise verhindert. Die Isoliervorrichtung ist in einfacher Weise verformbar und/oder an das zu isolierende Bauteil anpassbar und zwar derart, dass Formgebungswerkzeuge nicht erforderlich sind. Die Isoliervorrichtung und insbesondere der Innenmantel 1 und das äußere Drahtgewebe 4, welche bevorzugt aus dem gleichen Drahtgewebe bestehen, sind flexibel und/oder bevorzugt plastisch verformbar. Von besonderer Bedeutung ist, dass die für den Außenmantel 2 verwendete Folie oder Metallfolie oder das Blech einerseits plastisch verformbar und andererseits derart steif und/oder stabil ausgebildet sind, dass nach der Verformung das hergestellte Formteil in bevorzugter Weise dauerhaft und/oder im wesentlichen unverändert die Form beibehält. Nach der oben bereits erläuterten Herstellung der Verbindung des Innenmantels 1, des Isoliermaterials des vorteilhaft als Sperrschicht ausgebildeten Außenmantels 2 und zweckmäßig ferner des äußeren Drahtgewebes 4 wird die in flächiger Form vorgefertigte Isoliervorrichtung entsprechend dem zu isolierenden Bauteil, insbesondere manuell und/oder ohne ein besonderes Werkzeug verformt, wobei die Isoliervorrichtung auf oder um das Bauteil gelegt wird und in geeigneter Weise mit dem Bauteil verbunden wird.

Fig. 2 zeigt ein Ausführungsbeispiel der Isoliervorrichtung in flächiger Form vor der Verformung, wobei in den Randbereichen zur Verbindung der erläuterten Bestandteile oder Komponenten ein festgenähtes Saumband 6 und ferner Ösen oder Druckknöpfe 7 zu erkennen sind.

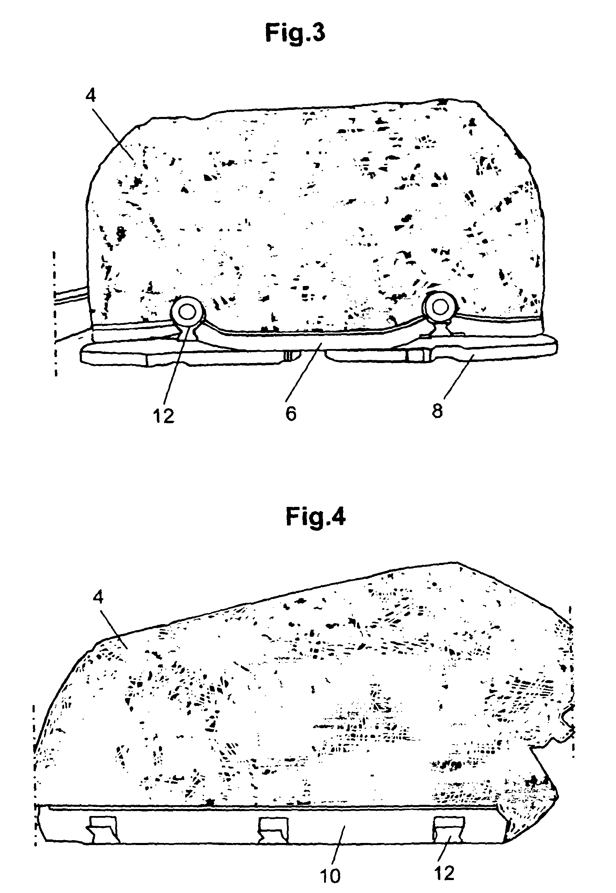

Fig. 3 zeigt die Isoliervorrichtung nach der Verformung bzw. dem Auflegen und Anpassen an die Außenkontur eines als Abgaskrümmers ausgebildeten Bauteils mit Flanschen 8, über welche die Verbindung mit einem hier nicht weiter dargestellten Motor erfolgt.

Gemäß Fig. 4 ist der Rand der Isoliervorrichtung mit einer im Querschnitt U-förmig ausgebildeten Schiene 10 eingefasst, wobei mittels U-Klammern bzw. Doppel-U-Klammern 12 die Festlegung bezüglich eines von der Isoliervorrichtung umgebenen Abgaskrümmers erfolgt.

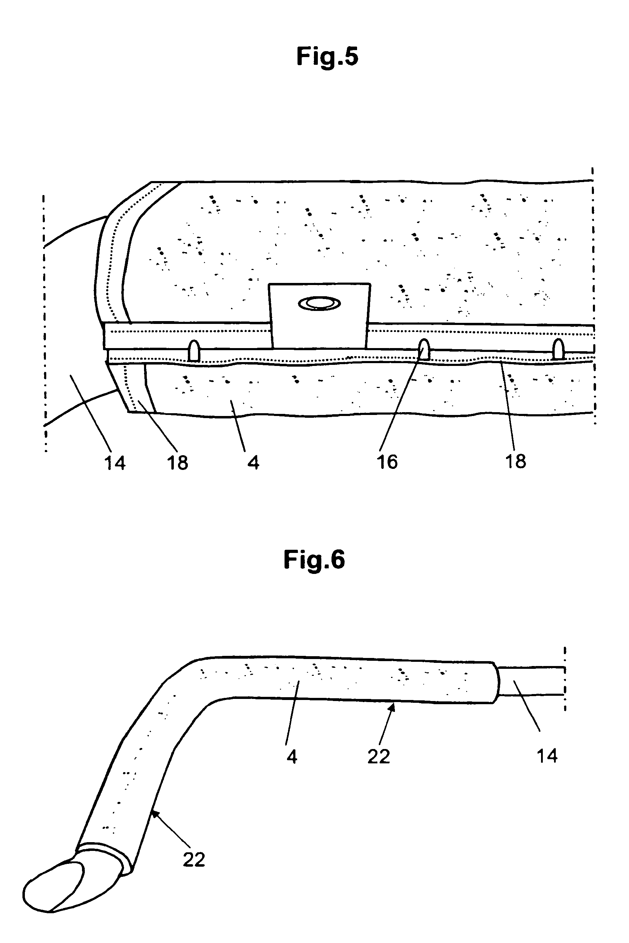

Fig. 5 zeigt eine Ausführungsform der Isoliervorrichtung eines Rohres 14. Die Isoliervorrichtung besitzt vor der Verformung eine rechteckförmige Außenkontur und wird in einfacher Weise um das Rohr 14 gelegt, wobei nachfolgend die Längsränder mittels Klammern 16 verbunden werden. Zweckmäßig sind an den Längsrändern, insbesondere innerhalb von Saumbändern 18 Drähte integriert, welche von den Klammern 16 erfasst werden.

Schließlich zeigt Fig. 6 ein Ausführungsbeispiel der Isoliervorrichtung, welche als Schlauch ausgebildet ist und auf das Rohr 14 aufgeschoben ist. Der Schlauch wurde aus einem Rechteck-Zuschnitt zunächst in flächiger Form gebildet, wobei die Längskanten in geeigneter Weise, insbesondere mittels Nähten oder dergleichen, verbunden wurden.

In einer besonderen Ausgestaltung der Erfindung wird die schlauchförmig ausgebildete Isoliervorrichtung auf das zunächst noch gerade Rohr 14 aufgeschoben und nachfolgend werden das Rohr und die Isoliervorrichtung gemeinsam und/oder in einem Verfahrensschritt verformt und/oder in die erforderliche Form gebogen. Nach dem gemeinsamen Verformen und/oder Biegen des Rohres und der Isoliervorrichtung können, wie dargestellt, die Rohrteile 20, 22 in einem vorgegebenen Winkel zueinander stehen, beispielsweise gemäß Zeichnung annähernd 90°. Es sei ausdrücklich festgehalten, dass im Rahmen der Erfindung die Isoliervorrichtung und das mit dieser gemeinsam verformte bzw. gebogene Rohr auch mehrere Verformungs- und/oder Biegestellen entsprechend den jeweiligen Einsatzbedingungen und Anforderungen enthalten können.

Es sei ausdrücklich hervorgehoben, dass jedes anhand eines der Ausführungsbeispiele erläuterten Merkmal in sinnfälliger Weise und/oder für die jeweiligen Anforderungen und/oder Verwendungszwecke auch für jedes andere Ausführungsbeispiel im Rahmen der Erfindung vorgesehen werden kann. Jede zur Lösung der zu Grunde liegenden Aufgabe geeignete Merkmalskombination der erläuterten Einzelmerkmale ist Gegenstand der Erfindung.

### Bezugszeichen

- 1: Innenmantel
- 2: Außenmantel
- 3: Isoliermaterial
- 4: äußeres Drahtgewebe
- 6: Saumband
- 7: Öse, Druckknopf
- 8: Flansch
- 10: Schiene
- 12: Klammer
- 14: Bauteil / Rohr
- 16: Klammer
- 18: Saumband
- 20,22: Rohrteil

## Patentansprüche

1. Isoliervorrichtung eines insbesondere von einem heißen Medium durchströmbaren Bauteils (14), enthaltend einen metallisches Drahtgewebe ausgebildeten Innenmantel (1) und einen Außenmantel (2), zwischen welchen Isoliermaterial (3) angeordnet ist, wobei der Innenmantel (1) dem Bauteil (14) zugeordnet ist,
**dadurch gekennzeichnet, dass** der Außenmantel (2), welcher als Edelstahlfolie, Aluminiumfolie oder als mit einer Kaschierung versehenes Glasgewebe ausgebildet ist, außen von einem metallischen Feindrahtgewebe (4) umgeben ist,
dass der Innenmantel (1) als Feindrahtgewebe ausgebildet ist
und dass das den Außenmantel (2) umgebende Feindrahtgewebe und das Feindrahtgewebe des Innenmantels Metalldrähte mit einer Drahtstärke im Bereich von 0,01 bis 0,09 mm aufweisen, wobei die Maschenweite im Bereich von 0,05 bis 0,14 mm vorgegeben ist, wobei die Isoliervorrichtung verformbar und an das Bauteil (14) anpassbar ist.

2. Isoliervorrichtung nach Anspruch 1, **dadurch gekennzeichnet dass** die Aluminiumfolie des Außenmantels eine Dicke im Bereich zwischen 0,01 bis 0,08 mm aufweist, insbesondere zwischen 0,02 bis 0,06 mm.

3. Isoliervorrichtung nach Anspruch 1. **dadurch gekennzeichnet, dass** die Edelstahlfolie eine Dicke im Bereich zwischen 0,05 bis 0,5 mm aufweist, insbesondere zwischen 0,075 bis 0,04 mm.

4. Isollervorrichtung nach Anspruch 3, **dadurch gekennzeichnet, dass** die Aluminiumfolie im Wesentlichen die gleiche Dicke wie die Edelstahlfolie aufweist oder um einen Faktor größer als 1,2 bis 2 ausgebildet ist

5. Isoliervorrichtung nach einem der Ansprüche 1 bis 4, **dadurch gekennzeichnet, dass** das Isoliermaterial (3) als Edelstahlwolle oder Dämmfasenrverkstoff oder Glasfasernadelmatte ausgebildet ist.

6. Isoliervorrichtung nach einem der Ansprüche 1 bis 5, **dadurch gekennzeichnet, dass** der Außenmantel (2) als Sperrschicht ausgebildet ist.

7. Isoliervorrichtung nach einem der Ansprüche 1 bis 6, **dadurch gekennzeichnet, dass** die Isoliervorrichtung, insbesondere der Innenmantel (1) und/oder der Außenmantel (2), flexibel oder bevorzugt plastisch verformbar ausgebildet sind.

8. Isoliervorrichtung nach einem der Ansprüche 1 bis 7, **dadurch gekennzeichnet, dass** das metallische Feindrahtgewebe Metalldrähte mit einer Drahtstärke im Bereich zwischen 0,03 bis 0,07 mm, und insbesondere von im Wesentlichen 0,05 mm, enthält.

9. Isoliervorrichtung nach einem der Ansprüche 1 bis 8, **dadurch gekennzeichnet, dass** die Maschenweite des metallischen Feindrahtgewebes im Bereich von 0,07 bis 0,12 mm und insbesondere von im Wesentlichen 0,09 mm vorgegeben ist

10. Isoliervorrichtung nach einem der Ansprüche 1 bis 9, **dadurch gekennzeichnet, dass** die offene Fläche zwischen den genannten Drähten im Bereich von 28 bis 55 %, vorteilhaft im Bereich von 35 bis 48 % und insbesondere von im Wesentlichen 41 % der Gesamtfläche vorgegeben ist.

11. Isoliervorrichtung nach einem der Ansprüche 1 bis 10, **dadurch gekennzeichnet**, das dieAluminium-oder Edelstahlfolie einerseits plastisch verformbar und andererseits derart steif oder stabil ausgebildet sind, dass nach der Verformung der Isoliervorrichtung das gebildete Formteil seine Form dauerhaft im Wesentlichen beibehält.

12. Isoliervorrichtung nach einem der Ansprüche 1 bis 11, **dadurch gekennzeichnet, dass** die Aluminium- oder Edelstahlfolie verschiedenartige oder vorgegebene Strukturen aufweisen, insbesondere eine Mikrostruktur und/oder Makrostruktur.

13. Verfahren zur Herstellung einer Isoliervorrichtung eines insbesondere von einem heißen Medium durchströmbaren Bauteils (14), enthaltend einen als metallisches Drahtgewebe ausgebildeten Innenmantel (1) und einen Außenmantel (2), zwischen welchen Isoliermaterial (3) angeordnet ist, nach einem der Ansprüche 1 bis 12,
**dadurch gekennzeichnet, dass** die Bestandteile der Isolienrorrichtung, nämlich der Innenmantel (1), das Isoliermaterial (3), der Außenmantel (2) und das äußere Feindrahtgewebe (4), zunächst bevorzugt als Rollenware bereitgestellt und gemeinsam einer Vorrichtung zur Vereinigung zu einem Flächenprodukt in Sandwich-Bauweise zugeführt werden, und zwar insbesondere quasi endlos, dass nachfolgend aus dem Flächenprodukt in einem gemeinsamen Zuschnitt oder bei gemeinsamer Fertigung oder Bearbeitung der genannten Bestandteile die gewünschte Außenkontur der Isoliervorrichtung erzeugt wird und dass in einem weiteren Verfahrensschritt die Verbindung von Innenmantel (1), Isoliermaterial (3) und Außenmantel (2) und dem äußeren Feindrahtgewebe (4) durchgeführt wird, und zwar immer noch in flächiger Form, und dass schließlich die deart vorgefertigte Isoliervorrichtung verformt wird, wahlweise mittels wenigstens eines Presswerkzeugs entsprechend den Außenkonturen des zu isolierenden Bauteils (14) oder ohne ein besonderes Werkzeug manuell, wobei die Isoliervorrichtung auf oder um das Bauteil (14) gelegt und mit dem Bauteil (14) verbunden wird.

14. Verfahren nach Anspruch 13, **dadurch gekennzeichnet, dass** aus dem vorgefertigten Flächenprodukt zunächst die Isoliervorrichtung schlauchförmig ausgebildet wird und auf das als zunächst noch gerades Rohr ausgebildete Bauteil aufgeschoben oder auf diesem als Schlauch angeordnet wird und dass nachfolgend das Rohr und die Isoliervorrichtung gemeinsam in einem weiteren Verfahrensschritt verformt und/oder gebogen werden.

## Claims

1. An insulating device of a component (14) through which in particular a hot medium can flow, containing an inner casing (1) configured as a metal wire mesh and an outer casing (2), between which insulating material (3) is disposed, wherein the inner casing (1) is assigned to the component (14), **characterised in that** the outer casing (2), which is configured as stainless steel foil, aluminium foil, or as a glass fabric provided with a lamination, is surrounded on the outside by a metallic fine wire mesh (4), that the inner casing (1) is configured as fine wire mesh, and that the fine wire mesh surrounding the outer casing (2) and the fine wire mesh of the inner casing comprise metal wires having a wire thickness in the range from 0.01 to 0.09 mm, wherein the mesh width is predefined in the range from 0.05 to 0.14 mm, wherein the insulating device is deformable and can be adapted to the component (14).

2. The insulating device according to claim 1, **characterised in that** the aluminium foil of the outer casing has a thickness in the range between 0.01 to 0.08 mm, in particular between 0.02 to 0.06 mm.

3. The insulating device according to claim 1, **characterised in that** the stainless steel foil has a thickness in the range between 0.05 to 0.05 mm, in particular between 0.075 to 0.04 mm.

4. The insulating device according to claim 3, **characterised in that** the aluminium foil substantially has the same thickness as the stainless steel foil or is configured to be a factor greater than 1.2 to 2.

5. The insulating device according to any one of claims 1 to 4, **characterised in that** the insulating material (3) is formed as stainless steel wool or insulating fibrous material or glass fibre needle mat.

6. The insulating device according to any one of claims 1 to 5, **characterised in that** the outer casing (2) is configured as a barrier layer.

7. The insulating device according to any one of claims 1 to 6, **characterised in that** the insulating device, in particular the inner casing (1) and/or the outer casing (2), are configured to be flexibly or preferably plastically deformable.

8. The insulating device according to any one of claims 1 to 7, **characterised in that** the metallic fine wire mesh contains metal wires having a wire thickness in the range between 0.03 to 0.07 mm, and in particular of substantially 0.05 nm.

9. The insulating device according to any one of claims 1 to 8, **characterised in that** the mesh width of the metallic fine wire mesh is predefined in the range from 0.07 to 0.12 mm, and in particular of substantially 0.09 mm.

10. The insulating device according to any one of claims 1 to 9, **characterised in that** the open area between the said wires is predefined in the range from 28 to 55%, advantageously in the range from 35 to 48% and in particular of substantially 41% of the total area.

11. The insulating device according to any one of claims 1 to 10, **characterised in that** the aluminium or stainless steel foil on the one hand are plastically deformable and on the other hand are configured to be stiff or stable in such a manner that after deformation of the insulating device, the shaped part formed substantially retains its shape permanently.

12. The insulating device according to any one of claims 1 to 11, **characterised in that** the aluminium or stainless steel foil has different types of or predefined structures, in particular a microstructure and/or macrostructure.

13. Method for manufacturing an insulating device of a component (14) through which in particular a hot medium can flow, containing an inner casing (1) configured as a metal wire mesh and an outer casing (2), between which insulating material (3) is disposed according to any one of claims 1 to 12, **characterised in that** the components of the insulating device, namely the inner casing (1), the insulating material (3), the outer casing (2), and the outer fine wire mesh (4), are firstly preferably prepared as rolled goods, and fed jointly to a device for combining to form a flat product in sandwich design and specifically in particular quasi-continuously, that subsequently the desired outer contour of the insulating device is produced from the flat product in a common blank or by jointly fabricating or processing the said components, and that in a further process step the inner casing (1), insulating material (3), and outer casing (2) and the outer fine wire mesh (4) are joined and specifically still in flat form and that finally the insulating device thus prefabricated is deformed, if desired by means of at least one pressing tool according to the outer contours of the component (14) to be insulated or manually without a special tool, wherein the insulating device is placed on or around the component (14) and connected to the component (14).

14. The method according to claim 13, **characterised in that** firstly the insulating device is formed in tubular form from the prefabricated flat product and slid onto the component initially still configured as a straight tube or is disposed thereon as a hose and that subsequently the tube and the insulating device are deformed and/or bent jointly in a further process step.

## Revendications

1. Dispositif d'isolation d'un composant (14) pouvant être traversé en particulier par un milieu chaud, contenant une enveloppe interne (1) conçue sous forme de tissu en fil métallique et une enveloppe externe (2), entre lesquelles est disposé du matériau isolant (3), l'enveloppe interne (1) étant attribuée au composant (14),
**caractérisé en ce que** l'enveloppe externe (2) qui est conçue sous forme de film d'acier inox, de film d'aluminium ou sous forme de tissu de verre doté d'un contre-collage, est entourée à l'extérieur par un tissu de fil fin métallique (4),
**en ce que** l'enveloppe interne (1) est conçue sous forme de tissu de fil fin
et **en ce que** le tissu de fil fin entourant l'enveloppe externe (2) et le tissu de fil fin de l'enveloppe interne présentent des fils métalliques avec une épaisseur de fil de l'ordre de 0,01 à 0,09 mm, la largeur de maille étant prédéfinie dans le plage de 0,05 à 0,14 mm, le dispositif d'isolation étant déformable et pouvant être adapté au composant (14).

2. Dispositif d'isolation selon la revendication 1, **caractérisé en ce que** le film d'aluminium de l'enveloppe externe présente une épaisseur comprise entre 0,01 et 0,08 mm, en particulier entre 0,02 et 0,06 mm.

3. Dispositif d'isolation selon la revendication 1, **caractérisé en ce que** le film d'acier inox présente une épaisseur située dans la plage entre 0,05 et 0,5 mm, en particulier entre 0,075 et 0,04 mm.

4. Dispositif d'isolation selon la revendication 3, **caractérisé en ce que** le film d'aluminium présente sensiblement la même épaisseur que le film d'acier inox ou est 1,2 à 2 fois plus épais.

5. Dispositif d'isolation selon l'une des revendications 1 à 4, **caractérisé en ce que** le matériau d'isolation (3) est conçu sous forme de laine d'acier inox ou de matériau à fibre isolante ou de tapis aiguilleté en fibre de verre.

6. Dispositif d'isolation selon l'une des revendications 1 à 5, **caractérisé en ce que** l'enveloppe externe (2) est conçue sous forme de couche de blocage.

7. Dispositif d'isolation selon l'une des revendications 1 à 6, **caractérisé en ce que** le dispositif d'isolation, en particulier l'enveloppe interne (1) et/ou l'enveloppe externe (2), sont conçues de façon flexible ou de préférence de façon plastiquement déformable.

8. Dispositif d'isolation selon l'une des revendications 1 à 7, **caractérisé en ce que** le tissu en fil fin métallique contient des fils métalliques présentant une épaisseur de fil comprise entre 0,03 et 0,07 mm, et en particulier essentiellement de 0,05 mm.

9. Dispositif d'isolation selon l'une des revendications 1 à 8, **caractérisé en ce que** la largeur de maille du tissu en fil fin métallique est prédéfinie dans la plage de 0,07 à 0,12 mm et en particulier essentiellement sur la valeur de 0,09 mm.

10. Dispositif d'isolation selon l'une des revendications 1 à 9, **caractérisé en ce que** la surface ouverte entre lesdits fils est prédéfinie dans la plage de 28 à 55 %, de façon avantageuse dans la plage de 35 à 48 % et en particulier sur la valeur représentant sensiblement 41 % de la surface totale.

11. Dispositif d'isolation selon l'une des revendications 1 à 10, **caractérisé en ce que** le film d'aluminium ou d'acier d'inox est conçu d'une part de façon plastiquement déformable et d'autre part de façon tellement rigide ou stable que, après la déformation du dispositif d'isolation, la partie moulée formée conserve sa forme de façon durable pour l'essentiel.

12. Dispositif d'isolation selon l'une des revendications 1 à 11, **caractérisé en ce que** le film d'aluminium ou le film d'acier inox présente des structures de nature différente ou prédéfinies, en particulier une microstructure et/ou une macrostructure.

13. Procédé pour fabriquer un dispositif d'isolation d'un composant (14) pouvant être traversé en particulier par un milieu chaud, contenant une enveloppe interne (1) conçue sous forme de tissu de fil métallique et une enveloppe externe (2), entre lesquelles est disposé du matériau d'isolation (3), selon l'une des revendications 1 à 12,
**caractérisé en ce que** les composants du dispositif d'isolation, à savoir l'enveloppe interne (1), le matériau isolant (3), l'enveloppe externe (2) et le tissu externe en fil fin (4), sont mis à disposition d'abord de préférence sous forme de marchandise en rouleau et sont amenés en commun à un dispositif pour les réunir en un produit de surface de type sandwich, et ce en particulier pratiquement de façon continue, **en ce qu'**ensuite, à partir du produit de surface, le contour extérieur choisi du dispositif d'isolation est généré dans le cadre d'une découpe commune ou en cas de fabrication commune ou d'usinage commun desdits composants et **en ce que**, lors d'une autre étape de procédé, la liaison de l'enveloppe interne (1), du matériau isolant (3), de l'enveloppe externe (2) et du tissu externe de fil fin (4) est effectuée, et ce toujours sous forme plane, et **en ce qu'**enfin le dispositif d'isolation préfabriqué de cette façon est déformé, au choix au moyen d'au moins un outil de pressage en fonction des contours extérieurs du composant (14) à isoler ou manuellement sans un outil particulier, de sorte que le dispositif d'isolation est placé sur ou autour du composant (14) et est relié au composant (14).

14. Procédé selon la revendication 13, **caractérisé en ce que**, à partir du produit de surface préfabriqué, le dispositif d'isolation est formé d'abord sous forme de flexible et enfilé sur le composant conçu sous forme de tuyau d'abord encore droit ou est disposé sur ce composant sous forme de flexible et **en ce qu'**ensuite le tuyau et le dispositif d'isolation sont déformés et/ou pliés conjointement dans une autre étape du procédé.
